Europäisches Patentamt

European Patent Office

Office européen des brevets

(11) Veröffentlichungsnummer: **0 289 817 B1**

# EUROPÄISCHE PATENTSCHRIFT

(45) Veröffentlichungstag der Patentschrift: **24.06.92**

(51) Int. Cl.⁵: **F01N 3/10**

(21) Anmeldenummer: **88105779.8**

(22) Anmeldetag: **12.04.88**

(54) **Wabenkörper zur Reinigung der Abgase von Verbrennungskraftmaschinen.**

(30) Priorität: **18.04.87 DE 3713209**

(43) Veröffentlichungstag der Anmeldung:
**09.11.88 Patentblatt 88/45**

(45) Bekanntmachung des Hinweises auf die
Patenterteilung:
**24.06.92 Patentblatt 92/26**

(84) Benannte Vertragsstaaten:
**AT BE CH DE ES FR GB GR IT LI LU NL SE**

(56) Entgegenhaltungen:
**EP-A- 0 222 355        DE-A- 805 649
DE-A- 2 459 362        DE-A- 2 709 003
GB-A- 2 040 179        US-A- 4 127 691
US-A- 4 402 871**

(73) Patentinhaber: **Thyssen Edelstahlwerke AG
August-Thyssen-Strasse 1
W-4000 Düsseldorf(DE)**

(72) Erfinder: **Behr, Friedrich, Dr. Ing.
Espenweg 19
W-4150 Krefeld(DE)**

**Beschreibung**

Die Erfindung betrifft Wabenkörper zur Reinigung der Abgase von Verbrennungskraftmaschinen. Die Wabenkörper dienen als Träger für Beschichtungen, insbesondere als Träger für einen edelmetallimprägnierten Wash-Coat.

Nach dem deutschen Gebrauchsmuster 73 02 106 werden zur Herstellung von Wabenkörpern aus Heizleitermaterial Folien wellig geprägt und abwechselnd mit einer glatten, ungeprägten Folie zum Körper gewickelt bzw. gestapelt. Die ungeprägte, glatte Folie dient zur Abstandshaltung. Der Nachteil dieser Anordnung ist es nun, daß ca. 20 % der effektiven Folienoberfläche als Anlagefläche dient und damit der chemischen Schadstoffumsetzung nicht zur Verfügung steht. Hierbei werden trapezförmige Kanäle einer mittleren Breite von ca. 1,1 mm und einer freien Höhe von ca. 1,1 mm gebildet. Nach Beschichtung mit einem keramischen Material (Wash-Coat) sind die freien Kanalquerschnitte etwa kreisförmig ausgebildet, weil sich in den Ecken dickere Wash-Coat-Schichten ablagern als auf den freien Folien-Flächen. Die für Anwendungen als Katalysatorträger für Kraftfahrzeuge üblichen Durchmesser der Kanalquerschnitte betragen dann etwa 1 mm, nachdem der Wash-Coat aufgebracht ist.

Die heute überwiegend üblichen Wabenkörper aus Keramik mit 400 Zellen/inch$^2$ weisen quadratische Kanalquerschnitte mit 1,1 x 1,1 mm auf. Die Wash-Coat-Ansammlung in den Ecken führt auch hier zu einem mehr kreisförmigen Querschnitt der Kanäle von ca. 1 mm Durchmesser.

In der DE-OS 27 59 559 wird vorgeschlagen, die Folie für Katalysatorträger-Wabenkörper pfeilförmig verzahnt zu prägen. Bei jeweils um 180° gedrehten Folienlagen mit dadurch entgegengesetzten Pfeilrichtungen kann auf eine glatte Zwischenlage verzichtet werden. Die sich überscheidenden Wellenberge sorgen für die Abstandshaltung. Eigene Messungen zeigen nun, daß hierbei eine Folge großer und kleiner hydraulischer Durchmesser je eines Kanales entsteht, obwohl die Querschnittfläche pro Kanal konstant bleibt. Dies führt zu wesentlich erhöhten Druckverlusten in der Summe über die Kanallänge, oder bei einer Vergrößerung der Wellenquerschnitte zu gleichem Druckverlust wie bei dem Katalysatorträger mit Zwischenlage, dann aber zu verringerten chemischen Schadstoffumsetzungen bei gleichem Katalysator-Trägervolumen.

Es ist nun Aufgabe der Erfindung, die Kanal-Querschnittsform so auszubilden, daß ein größeren Verhältnis von Schadstoffumsatz zu Druckverlust erzielt wird.

Diese Aufgabe wird bei einem beschichteten Wabenkörper mit Kanälen als Katalysatorträger zur Reinigung der Abgase von Verbrennungskraftmaschinen, bestehend aus mindestens zwei aufeinanderliegenden gewellten und gewickelten Metallfolien, von denen mindestens eine Wellenberge aufweist, *) dadurch erfindungsgemäß gelöst, daß die im Querschnitt nahezu rechteckigen Kanäle ein Verhältnis der Breite zur Höhe von 1,5 bis 15 aufweisen, und daß die Wellen zweier aufeinanderliegender Folien in die gleiche Richtung senkrecht zur Oberfläche der Folien weisen und die pfeilförmigen Spitzen der Wellenprägung aufeinanderliegender Folien jeweils in entgegengesetzte Richtung zeigen. Alternativ können die Richtungen der Schrägverzahnung gegen die Folienrichtung jeweils aufeinanderliegender Folien auch unter einem Winkel α jeweils verschieden sein. Bevorzugt ist die Breite der Kanäle 3 bis 8 mm und die Höhe der Kanäle 0,65 bis 0,9 mm.

Es wurde überraschend gefunden, daß sich bei den laminaren Strömungen, wie sie in den Trägern auftreten, die Ausbildung der Kanalquerschnitte als Spalt bzw. Rechteck oder mit ovaler Form ein bis zu 30 % besseres, d.h. größeres Verhältnis des Schadstoffumsatzes zum Druckverlust ergibt. Die Form der Kanäle führt zu einer geringeren Wandfläche als bei den Wabenkörpern nach dem Stand der Technik gleicher Größe und bringt insbesondere bei Wabenkörpern aus Metall noch den Vorteil, daß eine verringerte Folienmenge erforderlich ist.

Wenn der Wabenkörper aus Keramik besteht, läßt sich die erfindungsgemäße Querschnittsform durch eine geeignete Ausbildung des Extrusionswerkzeuges leicht einstellen.

Durch den erfindungsgemäßen Aufbau des Wabenkörpers wird neben einem günstigen Verhältnis von Schadstoffumsatz zu Druckverlust bei guter Stabilität einem nahezu rechteckigen Kanalquerschnitt ein kleinerer Flächenanteil der Wellung der darauffolgenden Folienlage hinzuaddiert. Auf diese Weise dienen nur etwa 5 bis 7 % der gesamten Folienoberfläche als Anlagefläche. Dabei erfolgte die Begrenzung der Breite der Kanäle durch die pfleilförmig geprägten Wellen.

Statt mit einer pfeilförmigen Wellung kann der Wabenkörper auch mit schrägverzahnten Wellungen so ausgebildet sein, daß die Wellenberge je zweier aufeinanderliegender Folien in gleicher Richtung, nämlich senkrecht zur Oberfläche der Folie, weisen, die Richtung der Schrägverzahnung gegen die Folienquerrichtung jeweils aufeinanderliegender Folien mit unterschiedlichen Winkeln angeordnet sind. Durch die ver-

*) die pfeilförmig   sind,

schiedenen Winkel kreuzen sich die Wellen und dienen als Abstandshalter und seitliche Begrenzung der langgezogenen Kanalquerschnitte.

Bei beiden Ausführungsarten können die aufeinanderliegenden Folienlagen entweder durch Wickeln oder Aufeinanderschichten hergestellt werden.

In einer besonders vorteilhaften Ausgestaltung sind die Querschnitte der Einzelkanäle im zentralen Flächenbereich der Wabenkörper-Querschnittsflächegrößer als die Querschnitte der Einzelkanäle im Außenbereich. Da die Rauchgasströmung bzw. Strömung der Verbrennungsgase ein Temperaturprofil mit höherer Temperatur in der Mitte des Abgasrohres aufweist und die Diffusionskonstanten der Schadstoffe mit der Temperatur steigen, die Dichte des Gases aber sinkt, wirkt sich die Vergrößerung der Kanalquerschnitte im inneren Bereich der Katalysatorträger günstig auf den Druckverlust aus, ohne den chemischen Umsatz zu senken. Außerdem wird durch die Maßnahme der Folienbedarf wesentlich verringert. Ein derartiger Wabenkörper ist durch Aufwickeln der Folien leicht herstellbar. Zu Beginn des Aufwickelns der Folien ist ein sehr kleiner Krümmungsradius vorhanden, der beim weiteren Aufwickeln abnimmt. Wegen des kleineren Krümmungsradius spannen sich die schräg- oder pfeilverzahnten Wellen zu Beginn stärker ab, als am Außenumfang des Körpers. Auf diese Weise werden im Innenbereich des Gesamtquerschnittes der Wickelkörper die größeren Kanalquerschnitte und damit größere hydraulische Durchmesser erzielt als außen.

Im folgenden wird die Erfindung anhand zweier Ausführungsbeispiele erläutert. Es zeigen im einzelnen

Fig. 1      den perspektivischen Ausschnitt zweier Folienlagen aus pfeilförmig gewellten Metallfolien und

Fig. 2      eine weitere Ausführungsart.

Ein Wabenkörper 1 zur Reinigung der Abgase von Verbrennungsmaschinen dient als Katalysatorträger. Die Querschnitte der Einzelkanäle weisen ein Verhältnis der Breite 3 zur Höhe 4 von 1,5 bis 15 auf. Dabei beträgt die Breite 3 der Einzelkanäle 2 ca. 3 bis 8 mm und die Höhe 4 der Einzelkanäle 0,65 bis 0,9 mm. Auf den durch die gewellten Metallfolien 6 gebildeten Wänden des Wabenkörpers 1 ist eine Beschichtung 5 aus einem keramischen Material (Wash-Coat) aufgebracht.

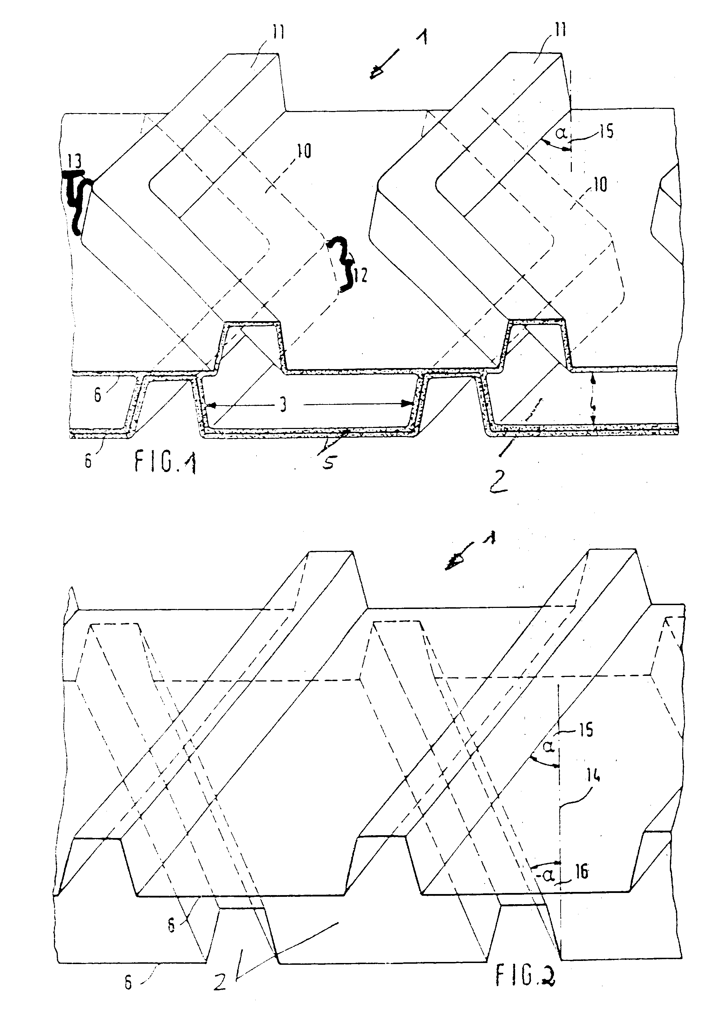

Nach Fig. 1 sind die Wellenberge 10,11 je zweier aufeinanderliegender Folien 6 in die gleiche Richtung, nämlich senkrecht zur Oberfläche der Folien, in der Zeichnung nach oben, herausgeprägt. Die Wellen 10,11 sind pfeilförmig ausgebildet und die Pfeilspitzen 12,13 der aufeinanderliegenden Folien 6 zeigen jeweils in entgegengesetzte Richtung. Auch bei dieser Ausführungsform kommt zu dem Volumen des rechteckigen Einzelkanals mit der Breite 3 und der Höhe 4 das Volumen der Wellen 10,11 hinzu.

Nach Fig. 2 sind bei Metallfolien 6 mit schrägverzahnten Wellen die Wellen ebenfalls in einer Richtung, in der Zeichnung nach oben, aus den Folien 6 herausgeprägt. Die Richtungen 15,16 der Schrägverzahnung unter dem Winkeln $\alpha$ der beiden aufeinanderliegenden Folien 6 zur Folienquerrichtung sind verschieden. Im Ausführungsbeispiel der Fig. 2 unterscheiden sie sich durch das Vorzeichen des Winkels $\alpha$.

Durch die Ausführung der Querschnitte der Einzelkanäle 2 in gestreckter Form wird trotz der Beschichtung 5 mit Wash-Coat ein großer, freier Querschnitt mit geringem Strömungswiderstand ohne Beeinträchtigung der umgesetzten Schadstoffmenge erreicht. Bei Versuchen mit einem Metallkörper mit pfeilförmiger Ausbildung der Wellungen nach Fig. 1 wurden gegenüber einem Metallkörper mit einer glatten Zwischenlage, bei dem die Wellung nach dem Stand der Technik mit kleinen, nahezu kreisförmigen Kanalquerschnitten von rd. 1 mm² ausgeführt war, folgende Werte enthalten:

| | |
|---|---|
| Prägehöhe der Wellen | 0,85 mm, pfeilverzahnt mit 6° Anstellwinkel ($\alpha$) |
| freie Kanalhöhe | 0,72 mm |
| freie Kanalbreite | 5 mm |
| Druckverlust | verringert um 15 % |
| chemischer Umsatz | verbessert |
| Folienmenge pro Katalysatorvolumen | verringert um 30 % |

Der aus den Folien nach Fig. 1 gewickelte Wabenkörper wies im Innenbereich des Gesamtquerschnitts des nicht dargestellten Wickelkörpers größere Kanalquerschnitte und damit hydraulische Durchmesser auf als außen.

**Patentansprüche**

1.    Beschichtete Wabenkörper mit Kanälen als Katalysatorträger zur Reinigung der Abgase von Verbrennungskraftmaschinen, bestehend aus mindestens zwei aufeinanderliegenden gewellten und gewickelten Metallfolien, von denen mindestens eine Wellenberge aufweist, die pfeilförmig sind, dadurch gekennzeichnet, daß die im Querschnitt nahezu rechteckigen Kanäle (2) ein Verhältnis der Breite (3) zur Höhe

3

(4) von 1,5 bis 15 aufweisen, und daß die Wellenberge (10,11) je zweier aufeinanderliegender Folien (6) in die gleiche Richtung senkrecht zur Oberfläche der Folien (6) weisen, und die pfeilförmigen Spitzen (12,13) der Wellenprägung aufeinanderliegender Folien (6) jeweils in entgegengesetzte Richtung zeigen.

2. Beschichtete Wabenkörper mit Kanälen als Katalysatorträger zur Reinigung der Abgase von Verbrennungskraftmaschinen, bestehend aus mindestens zwei aufeinanderliegenden gewellten und gewickelten Metallfolien, von denen mindestens eine Wellenberge aufweist, die schrägverzahnt sind, dadurch gekennzeichnet, daß die im Querschnitt nahezu rechteckigen Kanäle (2) ein Verhältnis der Breite (3) zur Höhe (4) von 1,5 bis 15 aufweisen, wobei die Wellenberge (10,11) je zweier aufeinanderliegender Folien in die gleiche Richtung senkrecht zur Oberfläche der Folien (6) weisen und die Richtungen (15,16) der Schrägverzannung gegen die Folienquerrichtung (14) jeweils aufeinanderliegender Folien (6) unter dem Winkel ($\alpha$, -$\alpha$) jeweils verschieden sind.

3. Wabenkörper nach Anspruch 1 oder 2, dadurch gekennzeichnet, daß die Breite (3) der Kanäle (2) 3 bis 8 mm und die Höhe (4) der Kanäle (2) 0,65 bis 0,9 mm beträgt.

## Claims

1. Coated honeycomb bodies with passages as catalyst support for purifying the waste gases of combustion engines, comprising at least two superposed waved and wound metal sheets, of which at least one has wave crests which are arrow-shaped, characterised in that the cross-sectionally virtually rectangular passages (2) have a ratio of width (3) to height (4) of 1.5 to 15 and in that the wave crests (10, 11) of each two superposed sheets (6) face in the same direction perpendicularly to the surface of the sheets (6), and the arrow-shaped tips (12, 13) of the waved embossing of superposed sheets (6) in each case point in the opposed direction.

2. Coated honeycomb bodies with passages as catalyst support for purifying the waste gases of combustion engines, comprising at least two superposed waved and wound metal sheets, of which at least one has wave crests which are obliquely serrated, characterised in that the cross-sectionally virtually rectangular passages (2) have a ratio of width (3) to height (4) of 1.5 to 15, the wave crests (10, 11) of each two superposed sheets facing in the same direction perpendicularly to the surface of the sheets (6) and the directions (15, 16) of the oblique serration differing in each case from the transverse sheet direction (14) of respectively superposed sheets (6) at the angle ($\alpha$, -$\alpha$).

3. Honeycomb bodies according to Claim 1 or 2, characterised in that the width (3) of the passages (2) is 3 to 8 mm and the height (4) of the passages (2) is 0.65 to 0.9 mm.

## Revendications

1. Eléments nid d'abeilles enduits, comportant des canaux comme supports de catalyseur, pour la purification des gaz d'échappement de machines à combustion interne, constitués d'au moins deux feuilles métalliques placées les unes au-dessus des autres ondulées et enroulées, l'une d'entre elles au moins présentant des crêtes d'ondulations en forme de flèches, caractérisés en ce que les canaux de section sensiblement rectangulaire (2) présentent un rapport largeur (3)/hauteur (4) de 1,5 à 15 et en ce que les crêtes (10,11) des ondulations de chacune des deux feuilles (6) superposées sont tournées dans la même direction, perpendiculairement à la surface des feuilles (6) et que les pointes (12,13) respectives des flèches de l'estampage ondulé des feuilles (6) superposées sont tournées en direction opposée.

2. Eléments nid d'abeilles enduits, comportant des canaux comme supports de catalyseur, pour la purification des gaz d'échappement de machines à combustion interne, constitués d'au moins deux feuilles métalliques placées les unes au-dessus des autres ondulées et enroulées, l'une d'entre elles au moins présentant des crêtes d'ondulations dentées obliquement, caractérisés en ce que les canaux (2) de section sensiblement rectangulaire présentent un rapport largeur (3)/hauteur (4) de 1,5 à 15, les crêtes (10,11) des ondulations de chacune des deux feuilles superposées étant tournées dans la même direction, perpendiculairement à la surface des feuilles (6) et les directions (15,16) de la denture oblique formant avec la direction (14) de chacune des feuilles (6) respectivement superposées un angle

respectif différent ($\alpha$, -$\alpha$).

3. Elément selon la revendication 1 ou 2, caractérisé en ce que la largeur (3) des canaux (2) va de 3 à 8 mm et leur hauteur (4) de 0,65 à 0,9 mm.

FIG.1

FIG.2